# EUROPÄISCHE PATENTANMELDUNG

(11) **EP 1 398 337 A2**
(43) Veröffentlichungstag der Anmeldung: **17.03.2004**
(21) Anmeldenummer: 03016282.0
(22) Anmeldetag: 18.07.2003
(51) Int. Cl.: C08G 63/553

(54) **Haftungsverbessernder Zusatz aus einem ungesättigten, amorphen Polyester**

(30) Priorität: 12.09.2002 DE 10242265
(71) Anmelder: Degussa AG, 40474 Düsseldorf (DE)
(72) Erfinder: Glöckner, Patrick, Dr., 40885 Ratingen (DE); Cerri, Alessandro, Dr., 48301 Nottuln (DE); Andrejewski, Werner, 46284 Dorsten (DE); Franzmann, Giselher, Dr., 58453 Witten (DE); Denkinger, Peter, Dr., 48301 Nottuln (DE)

(57) **Zusammenfassung**

Die Erfindung betrifft einen haftungsverbessernden Zusatz aus einem ungesättigten, amorphen Polyester sowie die Verwendung von ungesättigten, amorphen Polyestern als haftungsverbessernder Zusatz.

## Beschreibung

Die Erfindung betrifft einen haftungsverbessernden Zusatz aus einem ungesättigten, amorphen Polyester sowie die Verwendung von ungesättigten, amorphen Polyestern als haftungsverbessernder Zusatz.

Ungesättigte Polyesterharze (UP-Harze) sind bekannt. Sie werden durch Kondensation von gesättigten und ungesättigten Dicarbonsäuren oder deren Anhydriden mit Diolen hergestellt. Ihre Eigenschaften hängen weitgehend von Art und Mengenverhältnis der Ausgangsstoffe ab.

Als Träger der polymerisationsfähigen Doppelbindungen werden meist α, β-ungesättigte Säuren verwendet, in erster Linie Maleinsäure bzw. deren Anhydrid oder Fumarsäure; ungesättigte Diole sind von untergeordneter Bedeutung. Je höher der Gehalt an Doppelbindungen, d. h. je kürzer der Abstand der Doppelbindungen in den Kettenmolekülen ist, um so reaktiver ist das Polyesterharz. Es polymerisiert sehr rasch unter starker Wärmeentwicklung und hoher Volumenschrumpfung zu einem hochvernetzten und daher verhältnismäßig sprödem Endprodukt. Man "verdünnt" deshalb die reaktionsfähigen Doppelbindungen im Polyestermolekül durch Einkondensieren gesättigter aliphatischer oder aromatischer Dicarbonsäuren. Als Alkoholkomponenten werden geradkettige und/oder verzweigte Diole verwendet. Die einzelnen UP-Harztypen unterscheiden sich nicht nur durch die zu ihrer Herstellung verwendeten Komponenten sondern auch durch das Mengenverhältnis von gesättigten zu ungesättigten Säuren, das die Vernetzungsdichte bei der Polymerisation bestimmt, den Kondensationsgrad, d. h. die Molmasse, die Säure- und OH-Zahl, d. h. die Art der Endgruppen in den Kettenmolekülen, den Monomergehalt, die Art der Zusätze (Ullmann's Encyclopedia of Industrial Chemistry, VOL A21, S. 217 ff., 1992).

UP-Harze auf Basis von Dicidol als Diolkomponente sind z. B. bekannt aus DE 924 889, DE 953 117, DE 22 45 110, DE 27 21 989, EP 114 208, EP 934 988.

Der Einsatz von ungesättigten Polyesterharzen zur Verbesserung der Haftung ist z. B. aus DE 24 09 800, EP 114 208 und EP 934 988 bekannt.

Aufgabe der vorliegenden Erfindung war es, einen haftverbessernden Zusatz zu finden, der Eigenschaften von Beschichtungsstoffen wie z.B. die Haftung von Beschichtungsstoffen verbessert und gleichzeitig hohen Korrosionsschutz, hohe Härte, verbesserten Glanz und Feststoffgehalt sowie geringeren Volumenschrumpf bei vernetzten Systemen aufweist.

Gegenstand der Erfindung ist ein haftungsverbessernder Zusatz bestehend aus mindestens einem ungesättigten, amorphen Polyester, im Wesentlichen enthaltend mindestens eine α, β-ungesättigte Dicarbonsäurekomponente und eine Alkoholkomponente,
dadurch gekennzeichnet,
dass die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 5 % in der Alkoholkomponente des Polyesters vorhanden ist.

Weiterer Gegenstand der Erfindung ist die Verwendung von ungesättigten, amorphen Polyestern, im Wesentlichen enthaltend mindestens eine α, β-ungesättigte Dicarbonsäurekomponente und eine Alkoholkomponente, dadurch gekennzeichnet, dass die Alkoholkomponente aus einem Dicidolgemisch der isomeren Verbindungen 3,8-Bis(hydroxymethyl)tricyclo [5.2. 1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan besteht, wobei jedes Isomere zu einem Anteil von 20 bis 40 % in dem Gemisch enthalten sein kann und die Summe der drei Isomeren 90 bis 100 % ergibt, und das Gemisch mindestens zu 5 % in der Alkoholkomponente des Polyesters vorhanden ist, als haftungsverbessernder Zusatz.

Es hat sich gezeigt, dass eine universelle Verträglichkeit dieses Zusatzes mit weiteren Bestandteilen von Beschichtungsstoffen und/oder Klebstoffen und/oder Dichtmassen besteht. Beispielsweise können die haftungsverbessernden Zusätze gemischt werden mit Polyacrylaten, Polyolefinen, gesättigten und/oder ungesättigten Polyestern und Copolyestem, Cellulosenitrat, Phenol- und/oder Melamin-Formaldehydharzen, Phenolharzen, Alkydharzen, acrylierten Polyestern, Polyamiden, Phenol- bzw. Keton-Formaldehydharzen, Ketonharzen, Polyurethanen Polyharnstoffen, Epoxidharzen, Polyvinylchlorid und seinen Derivaten, wie Co- und Terpolymere, Polyvinylalkohole, PVDF, Polyethem, Siliconharzen, Chlorkautschuk, Cyclokautschuk, Celluloseacetobutyrat.

Die haftungsverbessernden Zusätze können z.B. als Bindemittel in Spachtelmassen eingesetzt werden und dort durch oxidative Trocknung oder durch Radikalreaktion korrosionsbeständige Schichten bilden. Die gute Haftung und die Möglichkeit, Vernetzungsreaktionen einzugehen, prädestinieren die erfindungsgemäßen Harze für den Korrosionsschutz. Neben der Erhöhung der Haftung wird außerdem die Zwischenschichthaftung zu darüber liegenden und darunter liegenden Grenzschichten verbessert. Ein weiterer Vorteil der erfindungsgemäßen Harze ist die hohe Hydrolysebeständigkeit. Beschichtungsstoffe die einen erfindungsgemäßen Zusatz enthalten zeichnet außerdem ein hoher Glanz und ein guter Verlauf aus.
In Spritzlacken wird zudem die Spritznebelaufnahme signifikant erhöht.

Die haftungsverbessernden Zusätze werden mit den o. g. Polymeren in wässrigen, lösemittelhaltigen (normal, medium, high, very high solids) und/oder lösemittelfreien (Pulver und/oder flüssig) wärmehärtbaren, strahlenhärtbaren, lufttrocknenden (oxidativ und physikalisch) Beschichtungsstoffen, Spachtel- und/oder Dichtmassen und Klebstoffen eingesetzt und sind als Modifizierungsharz geeignet für Primer, Füller, Basislacke, Einschichtdecklacke, Klarlacke, Klebstoffe, Dichtmassen, Straßenmarkierungsfarben, Korrosionsschutzanstrichen.

Im Folgenden werden die erfindungsgemäßen haftungsverbessernden Zusätze aus dem ungesättigten, amorphen Polyester näher beschrieben

Die erfindungsgemäßen ungesättigten, amorphen Polyesterharze werden durch Umsetzung der Alkoholkomponente und der Säurekomponente erhalten.

Als Alkoholkomponente wird erfindungsgemäß ein Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan eingesetzt, wobei jedes Isomere zu einem Anteil von 20 bis 40 % in dem Gemisch enthalten sein kann und die Summe der drei Isomeren 90 bis 100 %, bevorzugt 95 bis 100 %, ergibt, und das Gemisch mindestens zu 5 % in der Alkoholkomponente des Polyesters vorhanden ist, eingesetzt. Der Isomergehalt des Dicidolgemisches kann qualitativ und quantitativ z. B. durch GC-Analyse oder quantitativ durch Trennung mittels präparativer GC oder HPLC und anschließender NMR-Spektroskopie bestimmt werden. Alle entsprechenden Isomeren des Dicidols in 9-Stellung sind genau so geeignet, aber auf Grund der Spiegelsymmetrie von den o. g. Isomeren, wie auch die cis- und trans-Isomeren, unter normalen, praxisbezogenen Umständen nicht unterscheidbar.

Außerdem kann das Dicidolgemisch bis zu 10 % weitere Isomere des Dicidol und/oder trimere und/oder höhere isomere Diole des Diels-Alder-Umsetzungsproduktes aus Cyclopentadien enthalten. Bevorzugt besteht die Alkoholkomponente aus 20 %, aus 50 %, bevorzugt aus 90 %, besonders bevorzugt aus 100 % Dicidolgemisch, wobei dieses besonders bevorzugt 95 bis 100 % der oben genannten drei isomeren Verbindungen enthält.

Neben dem Dicidolgemisch kann die Alkoholkomponente weitere lineare und/oder verzweigte, aliphatische und/oder cycloaliphatische und/oder aromatische Diole und/oder Polyole enthalten. Bevorzugt werden als zusätzliche Alkohole Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit sowie Bisphenol A, B, C, F, Norbomylenglykol, 1,4-Benzyldimethanol und -ethanol, 2,4-Dimethyl-2-ethylhexan-1,3-diol eingesetzt.

Die erfindungsgemäßen ungesättigten, amorphen Polyesterharze enthalten als Ausgangssäurekomponente mindestens eine α, β-ungesättigte Dicarbonsäure. Bevorzugt enthalten die ungesättigten Polyesterharze Citracon-, Fumar-, Itacon-, Malein- und/oder Mesaconsäure.

Es können auch zusätzlich aromatische und/oder aliphatische und/oder cycloaliphatische Monocarbonsäuren und/oder Dicarbonsäuren und/oder Polycarbonsäuren enthalten sein, wie z. B. Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Isononansäure, 2-Ethylhexansäure, Pyromellitsäure und/oder Trimellitsäure. Bevorzugt sind Phthalsäure, Hexahydrophthalsäure, Tetrahydrophthalsäure, Adipin- und/oder Azelainsäure.

Die Säurekomponente kann teilweise oder vollständig aus Anhydriden und/oder Alkylestern, bevorzugt Methylestern, bestehen.

Im Allgemeinen ist die Alkoholkomponente im Mol-Verhältnis von 0,5 bis 2,0 zu 1 zur Säurekomponente enthalten, bevorzugt 0,8 bis 1,5 zu 1. Besonders bevorzugt findet die Umsetzung der Alkoholkomponente im Mol-Verhältnis von 1,0 bis 1,1 zu 1 zur Säurekomponente statt.

Die erfindungsgemäßen ungesättigten, amorphen Polyester können eine Säurezahl zwischen 1 und 200 mg KOH/g, bevorzugt zwischen 1 und 100, besonders bevorzugt zwischen 1 und 50 mg KOH/g sowie eine OH-Zahl zwischen 1 und 200 mg KOH/g, bevorzugt zwischen 1 und 100, besonders bevorzugt zwischen 1 und 50 mg KOH/g aufweisen.

Der Tg der erfindungsgemäßen ungesättigten, amorphen Polyester variiert von -30 bis +80 °C, bevorzugt -20 bis +50 °C, besonders bevorzugt - 10 bis + 40 °C.

In einer bevorzugten Ausführungsform I bestehen die erfindungsgemäßen gesättigten Polyester (UP-Harze) aus einer Alkoholkomponente mit mindestens 90 %, bevorzugt 95 %, besonders bevorzugt zu 100 % des Dicidolgemisches der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan und aus Fumarsäure und/oder Maleinsäure (anhydrid). In einer weiteren bevorzugten Ausführungsform II enthalten die Polyester die o. g. Ausgangskomponenten wie unter I, aber zusätzlich eine weitere Säure ausgewählt aus Adipinsäure oder Phthalsäure(anhydrid), wobei das Verhältnis der α, β-ungesättigten zur zusätzlichen Säure von 2 zu 1 bis 1 zu 4 variieren kann. Bevorzugt werden Verhältnisse von ca. 1 zu 1 bis 1 zu 2. Diese Polyester weisen allgemein Säurezahlen von 1 bis 200 mg KOH/g, bevorzugt 1 - 100 mg KOH/g, besonders bevorzugt 1 - 50 mg KOH/g, OH-Zahlen von 1 bis 200 mg KOH/g, bevorzugt 1 - 100 mg KOH/g, besonders bevorzugt 1 - 50 mg KOH/g und einen Tg von -30 bis +80 °C, bevorzugt -20 bis +50 °C, besonders bevorzugt -10 bis +40 °C auf.

Die erfindungsgemäßen Polyester können auch Hilfs- und Zusatzstoffe ausgewählt aus Inhibitoren, Wasser und/oder organischen Lösemitteln, Neutralisationsmitteln, grenzflächenaktiven Substanzen, Sauerstoff- und/oder Radikalfängern, Katalysatoren, Lichtschutzmitteln, Farbaufhellern, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzausrüstungen, internen Trennmitteln, Füllstoffen und/oder Treibmitteln, enthalten.

Hergestellt werden die erfindungsgemäßen Polyester durch (halb)kontinuierliche oder diskontinuierliche Veresterung und Kondensation der Ausgangssäuren und -alkohole in einstufiger oder zweistufiger Fahrweise.

### Beispiele

### Ausgangskomponente Dicidolgemisch (Anspruch 1) im Isomerverhältnis von annähernd 1 : 1 : 1

### Beispiel 1

Dodecandisäure und Fumarsäure (Verhältnis 0,6 : 0,4) werden mit Dicidol im Verhältnis 1 : 1,05 bei 180 °C in Stickstoffatmosphäre zur Reaktion gebracht bis eine Säurezahl von 24 mg KOH/g und eine OH-Zahl von 34 mg KOH/g erreicht ist. Hierzu wird zunächst die Fumarsäure mit Dicidol über eine Stunde verestert und dann die Dodecandisäure zugesetzt. Mₙ = 2200 g/mol M_{w} = 5500 g/mol, Glasübergangstemperatur 4 °C.

### Beispiel 2

Adipinsäure und Maleinsäure (Verhältnis 1 : 1) werden mit Dicidol im Verhältnis 1 : 1,05 bei 180 °C in Stickstoffatmosphäre zur Reaktion gebracht bis eine Säurezahl von 26 mg KOH/g und eine OH-Zahl von 37 mg KOH/g erreicht ist. Hierzu wird zunächst die Maleinsäure mit Dicidol über eine Stunde verestert und dann die Adipinsäure zugesetzt. Mₙ = 1800 g/mol M_{w} = 4300 g/mol, Glasübergangstemperatur 12 °C.

### Anwendungsbeispiele

### Anwendungsbeispiel 1

In einem roten Korrosionsschutzlack auf Basis eines löslichen VC-Copolymeren werden jeweils 5 Gew.-% des Bindemittels durch die erfindungsgemäßen Harze nach Beispiel 1 und 2 in Form ihrer 60%igen Lösungen in Xylol ersetzt. Die ursprüngliche schlechte Haftung auf verzinkten Blechen, gemessen als Gitterschnittkennwert "G5" wird durch die Zusätze zu den sehr guten Werten von jeweils "G0" verbessert.

| Rezepturen: | 1 | 2 | 3 |
|---|---|---|---|
| Vilit ® MB 30 | 13,4 | 13,1 | 13,1 |
| Hordaresin NP 70 | 9,2 | 9,0 | 9,0 |
| Vestinol ® AH | 4,1 | 4,0 | 4,0 |
| Araldit ® GY 250 | 0,5 | 0,5 | 0,5 |
| Butylacetat | 2,0 | 2,0 | 2,0 |
| Xylol | 13,3 | 13,0 | 13,0 |
| Solvesso ® 100 | 12,6 | 12,2 | 12,2 |
| Haftharz nach Beispiel 1 - 60%ig in Xylol | - | 2,2 | - |
| Haftharz nach Beispiel 2 - 60%ig in Xylol | - | - | 2,2 |
| Thixotrol ® ST 10%ig in Xylol | 9,2 | 9,0 | 9,0 |
| Perenol ® F 1 | 0,3 | 0,3 | 0,3 |
| Bayfferox ® 130 | 5,1 | 5,0 | 5,0 |
| Zinkoxid Harzsiegel S - NT | 2,3 | 2,3 | 2,3 |
| Blanc fixe N | 14,0 | 13,7 | 13,7 |
| Micro Talk AT 1 | 14,0 | 13,7 | 13,7 |
| | **100,0** | **100,0** | **100,0** |

| | |
|---|---|
| Untergrund | verzinkter Stahl |
| | |
| Schichtdicke (trocken) | ca. 30 µm |
| | |
| Trocknung | 24 h Raumtemperatur |
| | |
| Gitterschnittwert [Gt] | |
| Rezeptur 1 | 5 |
| Rezeptur 2 | 0 |
| Rezeptur 3 | 0 |

### Anwendungsbeispiel 2

In einem weißen Korrosionsschutzlack auf Basis von Chlorkautschuk werden jeweils 5 Gew.-% des Bindemittels durch die erfindungsgemäßen Harze nach Beispiel 1 und 2 in Form ihrer 60%igen Lösungen in Xylol ersetzt. Diese Zusätze verbessern die Haftung derartiger Lacke auf unvorbehandeltem Stahl, verzinktem Stahl und Aluminium signifikant.

| Rezepturen: | 1 | 2 | 3 |
|---|---|---|---|
| Pergut ® S 10 | 24,0 | 22,8 | 22,8 |
| Xylol | 43,2 | 42,1 | 42,1 |
| Vestinol ® AH | 7,6 | 7,2 | 7,2 |
| Edenol ® D 81 | 1,5 | 1,4 | 1,4 |
| TiO₂ Kronos ® 2059 | 23,7 | 23,7 | 23,7 |
| Haftharz nach Beispiel 1 in 60%igen Xylol | - | 2,8 | - |
| Haftharz nach Beispiel 2 in 60%igen Xylol | - | - | 2,8 |
| | **100,0** | **100,0** | **100,0** |

| | |
|---|---|
| Schichtdicke | 25 - 30 µm |
| Trocknung | 24 h Raumtemperatur |

| **Untergrund** | **Stahl** | **verzinkter Stahl** | **Aluminium** |
|---|---|---|---|
| Rezeptur 1 | Gt5 | Gt3 | Gt5 |
| Rezeptur 2 | Gt0 | Gt0 | Gt0 |
| Rezeptur 3 | Gt0 | Gt0 | Gt0 |

### Anwendungsbeispiel 3

In einem weißen Einbrennlack auf Basis eines hydroxylgruppenhaltigen Polyacrylatharzes, vernetzt mit einem vollmethylveretharten Melaminharz werden jeweils 5 Gew.-% des Bindemittels durch die erfindungsgemäßen Haftharze nach Beispiel 1 und 2 in Form ihrer 60%igen Lösungen in Xylol ersetzt. Die in der O-Probe nur mäßige Haftung auf verzinktem Stahl wird signifikant verbessert.

| Rezepturen: | 1 | 2 | 3 |
|---|---|---|---|
| Paraloid ® AT 410 | 43,0 | 40,5 | 40,5 |
| Cymel ® 303 | 8,2 | 7,8 | 7,8 |
| Methoxypropanol | 5,3 | 5,1 | 5,1 |
| Butanol | 2,1 | 2,0 | 2,0 |
| Dynapol ® Katalysator 1203 | 2,0 | 2,0 | 2,0 |
| TiO₂ Kronos ® 2059 | 39,4 | 39,4 | 39,4 |
| Haftharz nach Beispiel 1 in 60%igen Xyol | - | 3,2 | - |
| Haftharz nach Beispiel 2 in 60%igen Xyol | - | - | 3,2 |
| | **100,0** | **100,0** | **100,0** |

| | |
|---|---|
| Einbrennbedingungen | 30 min 130 °C |
| | |
| Untergrund | verzinkter Stahl |
| | |
| Schichtdicke (trocken) | 25 - 30 µm |
| | |
| Gitterschnittwert [Gt] | |
| Rezeptur 1 | 2 - 3 |
| Rezeptur 2 | 0 - 1 |
| Rezeptur 3 | 0 |

### Anwendungsbeispiel 4

In einem weißen Einbrennlack auf Basis eines hydroxylgruppenhaltigen, gesättigten Polyesterharzes, vernetzt mit einem blockiertem Polyisocyanat werden jeweils 5 Gew.-%.des Bindemittels durch die erfindungsgemäßen Haftharze nach Beispiel 1 und 2 in Form ihrer 60%igen Lösungen in Xylol ersetzt. Die ursprüngliche mäßige Haftung auf verzinktem Stahl wird stark verbessert.

| Rezepturen: | 1 | 2 | 3 |
|---|---|---|---|
| Dynapol ® H 905-07 | 42,5 | 40,3 | 40,3 |
| VESTANAT ® B 1370 | 15,5 | 14,8 | 14,8 |
| DBTL, 10%ig in Xylol | 1,0 | 1,0 | 1,0 |
| Xylol | 4,1 | 4,0 | 4,0 |
| Butylacetat | 1,9 | 1,9 | 1,9 |
| TiO₂ Kronos ® 2059 | 35,0 | 35,0 | 35,0 |
| Haftharz nach Beispiel 1 in 60%igen Xyol | - | 3,0 | - |
| Haftharz nach Beispiel 2 in 60%igen Xyol | - | - | 3,0 |
| | **100,0** | **100,0** | **100,0** |

| | |
|---|---|
| Einbrennbedingungen | 15 min 170 °C |
| | |
| Untergrund | verzinkter Stahl |
| | |
| Schichtdicke (trocken) | 25 - 30 µm |
| | |
| Gitterschnittwert [Gt] | |
| Rezeptur 1 | 2 - 3 |
| Rezeptur 2 | 0 - 1 |
| Rezeptur 3 | 0 |

## Patentansprüche

1. Haftungsverbessernder Zusatz bestehend aus mindestens einem ungesättigten, amorphen Polyester, im Wesentlichen enthaltend mindestens eine α, β-ungesättigte Dicarbonsäurekomponente und eine Alkoholkomponente,
**dadurch gekennzeichnet,**
**dass** die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 5 % in der Alkoholkomponente des Polyesters enthalten ist.

2. Haftungsverbessernder Zusatz nach Anspruch 1,
**dadurch gekennzeichnet,**
**dass** bis zu 10 % weitere Isomere des Dicidols und/oder trimere und/oder höhere isomere Diole des Diels-Alder-Umsetzungsproduktes aus Cyclopentadien enthalten sind.

3. Haftungsverbessernder Zusatz nach einem der vorherigen Ansprüche,
**dadurch gekennzeichnet,**
**dass** die Säurekomponente zusätzlich aromatische und/oder aliphatische und/oder cycloaliphatische Monocarbonsäuren und/oder Dicarbonsäuren und/oder Polycarbonsäuren enthält.

4. Haftungsverbessernder Zusatz nach einem der vorherigen Ansprüche,
**dadurch gekennzeichnet,**
**dass** die Säurekomponente teilweise oder ganz aus Anhydriden und/oder Alkylestern besteht.

5. Haftungsverbessernder Zusatz nach einem der vorherigen Ansprüche,
**dadurch gekennzeichnet,**
**dass** die Alkoholkomponente weitere lineare und/oder verzweigte, aliphatische und/oder cycloaliphatische und/oder aromatische Diole und/oder Polyole enthält.

6. Haftungsverbessernder Zusatz nach einem der vorherigen Ansprüche,
**dadurch gekennzeichnet,**
**dass** als α, β-ungesättigte Dicarbonsäure Citracon-, Fumar-, Itacon-, Malein- und/oder Mesaconsäure enthalten ist.

7. Haftungsverbessernder Zusatz nach einem der vorherigen Ansprüche,
**dadurch gekennzeichnet,**
**dass** als zusätzliche Säuren Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Pyromellitsäure und/oder Trimellitsäure, deren Säureanhydride und/oder Methylester enthalten sind sowie Isononansäure und 2-Ethylhexansäure.

8. Haftungsverbessernder Zusatz nach einem der vorherigen Ansprüche,
**dadurch gekennzeichnet,**
**dass** als zusätzliche Alkohole Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit, Bisphenol A, B, C, F, Norbornylenglykol, 1,4-Benzyldimethanol und - ethanol, 2,4-Dimethyl-2-ethylhexan-1,3-diol enthalten sind.

9. Haftungsverbessernder Zusatz nach einem der vorherigen Ansprüche,
**dadurch gekennzeichnet,**
**dass** die Alkoholkomponente mindestens zu 20 % aus den Isomeren gemäß Anspruch 1 oder 2 besteht.

10. Haftungsverbessernder Zusatz nach einem der vorherigen Ansprüche,
**dadurch gekennzeichnet,**
**dass** die Alkoholkomponente mindestens zu 50 % aus den Isomeren gemäß Anspruch 1 oder 2 besteht.

11. Haftungsverbessernder Zusatz nach einem der vorherigen Ansprüche,
**dadurch gekennzeichnet,**
**dass** die Alkoholkomponente zu mindestens 90 % aus den Isomeren gemäß Anspruch 1 oder 2 besteht.

12. Haftungsverbessernder Zusatz nach einem der vorherigen Ansprüche,
**dadurch gekennzeichnet,**
**dass** die Alkoholkomponente zu 100 % aus den Isomeren gemäß Anspruch 1 oder 2 besteht.

13. Haftungsverbessernder Zusatz nach einem der vorherigen Ansprüche,
**dadurch gekennzeichnet,**
**dass** als α, β-ungesättigte Säurekomponente Fumarsäure und/oder Maleinsäure(anhydrid) enthalten sind.

14. Haftungsverbessernder Zusatz nach einem der vorherigen Ansprüche,
**dadurch gekennzeichnet,**
**dass** als weitere Dicarbonsäurekomponente Adipinsäure und/oder Phthalsäure(anhydrid) enthalten sind.

15. Haftungsverbessernder Zusatz nach einem der vorherigen Ansprüche,
**dadurch gekennzeichnet,**
**dass** die Alkoholkomponente im Mol-Verhältnis von 0,5 bis 2,0 zu 1 zur Säurekomponente enthalten ist.

16. Haftungsverbessernder Zusatz nach einem der vorherigen Ansprüche,
**dadurch gekennzeichnet,**
**dass** die Alkoholkomponente im Mol-Verhältnis von 0,8 bis 1,5 zu 1 zur Säurekomponente enthalten ist.

17. Haftungsverbessernder Zusatz nach einem der vorherigen Ansprüche,
**dadurch gekennzeichnet,**
**dass** die Alkoholkomponente im Mol-Verhältnis von 1,0 bis 1,1 zu 1 zur Säurekomponente enthalten ist.

18. Haftungsverbessernder Zusatz nach einem der vorherigen Ansprüche,
**dadurch gekennzeichnet,**
**dass** dieser eine Säurezahl zwischen 1 und 200 mg KOH/g, bevorzugt zwischen 1 und 100, besonders bevorzugt zwischen 1 und 50 mg KOH/g, aufweist.

19. Haftungsverbessernder Zusatz nach einem der vorherigen Ansprüche,
**dadurch gekennzeichnet,**
**dass** dieser eine OH-Zahl zwischen 1 und 200 mg KOH/g, bevorzugt zwischen 1 und 100, besonders bevorzugt zwischen 1 und 50 mg KOH/g, aufweist.

20. Haftungsverbessernder Zusatz nach einem der vorherigen Ansprüche,
**dadurch gekennzeichnet,**
**dass** Hilfs- und Zusatzstoffe enthalten sind.

21. Haftungsverbessernder Zusatz nach einem der vorherigen Ansprüche,
**dadurch gekennzeichnet,**
**dass** Hilfs- und Zusatzstoffe, ausgewählt aus Inhibitoren, Wasser und/oder organischen Lösemitteln, Neutralisationsmitteln, grenzflächenaktiven Substanzen, Sauerstoffund/oder Radikalfängern, Katalysatoren, Lichtschutzmitteln, Farbaufhellern, Photoensibilisatoren, Thixotropiermitteln, Hautverhinderungsmitteln, Entschäumern, Antistatika, Eindickungsmitteln, thermoplastischen Additiven, Farbstoffen, Pigmenten, Brandchutzausrüstungen, internen Trennmitteln, Füllstoffen und/oder Treibmitteln, enthalten sind.

22. Haftungsverbessernder Zusatz nach einem der vorherigen Ansprüche,
**dadurch gekennzeichnet,**
**dass** die Alkoholkomponente aus mindestens 90 % Dicidolgemisch gemäß Anspruch 1 und/oder Anspruch 2 besteht und Fumarsäure und/oder Maleinsäure(anhydrid) im Diol-/Säure-Verhältnis 0,9 bis 1,1 zu 1 enthalten ist.

23. Haftungsverbessernder Zusatz nach einem der vorherigen Ansprüche,
**dadurch gekennzeichnet,**
**dass** zusätzlich Adipinsäure und/oder Phthalsäure(anhydrid) als Säurekomponente enthalten sind in einem Verhältnis α, β-ungesättigte zur zusätzlichen Säure von 3 zu 1 bis 1 zu 4, bevorzugt von 1 zu 1 bis 1 zu 2.

24. Verwendung von ungesättigten, amorphen Polyestern nach einem der vorherigen Ansprüche, im Wesentlichen enthaltend mindestens eine α, β-ungesättigte Dicarbonsäurekomponente und eine Alkoholkomponente,
**dadurch gekennzeichnet,**
**dass** die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 5 % in der Alkoholkomponente des Polyesters vorhanden ist, als haftungsverbessernder Zusatz.

25. Verwendung nach Anspruch 24,
**dadurch gekennzeichnet,**
**dass** als Ausgangskomponenten Verbindungen der Ansprüche 2 bis 23 enthalten sind.

26. Verwendung nach Anspruch 24 bis 25 als haftungsverbessernder Zusatz in Beschichtungsmitteln, die Wasser und/oder Lösemittel enthalten oder frei von organischen Lösemitteln und/oder Wasser sind.

27. Verwendung nach Anspruch 26 als haftungsverbessernder Zusatz in Beschichtungsmitteln ausgewählt aus Farben, Lacken, Lasuren, Straßenmarkierungen, Spachtelmassen, Pigmentpasten.

28. Verwendung nach Anspruch 27 als haftungsverbessernder Zusatz in Primern, Füllern, Basis-, Deck- und Klarlacken.
